# EUROPÄISCHE PATENTSCHRIFT

(11) **EP 2 899 318 B1**
(45) Veröffentlichungstag und Bekanntmachung des Hinweises auf die Patenterteilung: **20.04.2016**
(21) Anmeldenummer: 15150608.6
(22) Anmeldetag: 09.01.2015
(51) Int. Cl.: E01C 19/26, B60N 2/14

(54) **Selbstfahrende Straßenbaumaschine, insbesondere Straßenwalze, sowie Verfahren zum Fahren einer Straßenbaumaschine**
Self-propelled street construction machine, in particular road roller, and a method for driving a street construction machine
Engin automobile de construction routière, en particulier compresseur et procédé de conduite d'un engin de construction routière

(30) Priorität: 23.01.2014 DE 102014201240
(43) Veröffentlichungstag der Anmeldung: 29.07.2015
(73) Patentinhaber: Hamm AG, 95643 Tirschenreuth (DE)
(72) Erfinder: Bornemann, Detlef, 95666 Leonberg (DE); Römer, Axel, 95643 Tirschenreuth (DE); Mahler, Gerhard, 92670 Windischeschenbach (DE); Baumann, Andreas, 92421 Schwandorf (DE)
(74) Vertreter: von Kreisler Selting Werner - Partnerschaft von Patentanwälten und Rechtsanwälten mbB

(56) Entgegenhaltungen:
- EP-A1- 1 573 134

## Beschreibung

Die Erfindung betrifft eine selbstfahrende Straßenbaumaschine, insbesondere eine Straßenwalze, nach dem Oberbegriff des Anspruchs 1, sowie ein Verfahren zum Fahren einer Straßenbaumaschine nach dem Oberbegriff des Anspruchs 8.

Eine gattungsgemäße Straßenbaumaschine ist aus der EP 1 573 134 A bekannt. Die Straßenwalze arbeitet z.B. hinter einem Fertiger, der Asphaltmaterial einbaut und vorverdichtet. Die Straßenwalze überfährt die vom Fertiger eingebauten Flächen mehrmals, um die Endverdichtung und die Ebenheit der Fläche herzustellen. Dabei wird häufig die Fahrtrichtung gewechselt. Der Anteil der Vorwärts- und Rückwärtsfahrten ist in der Regel annähernd gleich. Um die Straßenwalze sicher zu bedienen, muss für die wesentlichen Bedienelemente wie Fahrtrichtungsgeber (Lenkrad, Joystick) und Fahrhebel zur Wahl der Geschwindigkeit für den Bediener eine eindeutige Zuordnung zur Fahrtrichtung gegeben sein.

Aus der EP 1 573 134 A ist auch bekannt, das Bedienelement für Fahrgeschwindigkeit und Lenkung in einen drehbaren Fahrersitz zu integrieren, wobei die Stellbewegungsrichtung des Bedienungselementes in jeder Sitzdrehposition mit der Fahrtrichtung der Straßenbaumaschine übereinstimmt.

Der Erfindung liegt die Aufgabe zugrunde, bei einer selbstfahrenden Straßenbaumaschine, insbesondere eine Straßenwalze und bei einem Verfahren zum Fahren einer Straßenbaumaschine die Steuerungsmöglichkeiten zu verbessern und dadurch die Betriebssicherheit zu erhöhen.

Zur Lösung dieser Aufgabe dienen die Merkmale des Anspruchs 1, sowie des Anspruchs 8.

Die Erfindung sieht in vorteilhafter Weise vor, dass die Steuerung auf einen ersten Schaltbefehl hin einen Reversiervorgang mit Verzögerung, Sitzdrehung, Fahrtrichtungswechsel und Beschleunigung auf die eingestellte Fahrgeschwindigkeit in Gegenrichtung zur ursprünglichen Fahrtrichtung automatisch ausführt.

Dies hat den Vorteil, dass der Fahrer nicht mehr manuell die Sitzdrehung und während der Sitzdrehung die Fahrgeschwindigkeit der Straßenbaumaschine koordinieren muss, sondern dass die Sitzdrehung per Knopfdruck ausgelöst werden kann und automatisch ausgeführt wird, wobei gleichzeitig die Steuerung der Fahrgeschwindigkeit automatisch koordiniert wird, bis die Fahrgeschwindigkeit in Gegenrichtung erreicht ist. Dadurch kann sich der Fahrzeugführer bei einer Richtungsumkehr, z. B. auf die Lenkung konzentrieren, so dass nicht nur die Steuerungsmöglichkeiten verbessert sind, sondern auch die Betriebssicherheit, da sich der Fahrzeugführer nicht mehr gleichzeitig zusätzlich noch auf eine Koordination der Sitzdrehung und der Fahrgeschwindigkeit konzentrieren muss.

Es ist vorzugsweise vorgesehen, dass das Bedienelement in einem drehbaren Fahrersitz integriert ist.

Dabei kann vorgesehen sein, dass die Steuerung in einem Winkelbereich der Sitzdrehung von 80° bis 100°, vorzugsweise von 85° bis 95°, zur ursprünglichen Fahrtrichtung die Fahrgeschwindigkeit bis zum Stillstand reduziert.

Insbesondere kann vorgesehen sein, dass die Steuerung bei Einleitung des Reversiervorgangs die vorgewählte Fahrgeschwindigkeit bis zu einer Sitzdrehung von 90° zur ursprünglichen Fahrtrichtung automatisch, vorzugsweise kontinuierlich auf Null reduziert und anschließend bei einer weiteren Sitzdrehung bis auf 180° wieder auf die ursprünglich vorgewählte Fahrgeschwindigkeit in entgegengesetzter Richtung einstellt. Bei dem automatisch erfolgenden Reversiervorgang aufgrund des Schaltbefehls beginnt der Sitz sich zu drehen, während die Straßenwalze langsamer wird. Während der Sitz durch die 90°-Stellung zur ursprünglichen Fahrtrichtung fährt, wird die Fahrgeschwindigkeit zur Fahrtrichtungsumkehr bis auf Null reduziert und anschließend wieder z.B. auf die ursprünglich vorgewählte Fahrgeschwindigkeit hochgefahren. Der Stillstand der Maschine erfolgt dabei in der 90°-Stellung des Sitzes oder zumindest in der Nähe der 90°-Stellung. Wenn der Sitz sich in die neue Fahrtrichtung dreht, wird das Bedienelement auf die neue Fahrtrichtung umgesteuert.

Vorzugsweise ist vorgesehen, dass bei Veränderung der Position des Bedienelementes oder einer Krafteinwirkung auf das Bedienelement während des Reversiervorgangs die Steuerung einen Maschinenstillstand und/oder eine Stillsetzung der Sitzdrehung auslöst.

Es kann ferner vorgesehen sein, dass die Steuerung, falls der Fahrersitz bei Einleitung des Reversiervorgangs auf eine von den Ausgangspositionen von 0° bzw. 180° abweichende Sitzdrehposition eingestellt ist, die Sitzdrehungsposition zunächst in eine Ausgangsposition überführt, oder die Sitzdrehposition des Fahrersitzes auf dem kürzesten Weg in eine gewünschte Sitzdrehposition überführt.

Die Steuerung kann bei Erreichen einer gewünschten Fahrgeschwindigkeit der Straßenwalze auf einen zweiten Schaltbefehl hin in den Automatikbetrieb übergehen, in dem die aktuellen Stellsignale für den Fahrantrieb automatisch konstant gehalten werden.

Dabei kann der Fahrer durch seine Krafteinwirkung auf das Bedienelement, z.B. einen Steuerhebel in der Art eines Joysticks, beschleunigen oder verzögern, wobei die Richtung und Höhe der Kraft in Bezug auf die Fahrtrichtung ausgewertet werden. Bei Erreichen der gewünschten Geschwindigkeit bestätigt der Fahrer dies durch einen Taster. Die Maschine fährt jetzt so lange mit konstanter Geschwindigkeit, bis über eine Krafteinwirkung auf das Bedienelement eine Beschleunigung bzw. Verzögerung eingeleitet wird.

Dabei ist vorzugsweise vorgesehen, dass die Steuerung aus dem Automatikbetrieb auf manuellen Betrieb umschaltet, wenn die Höhe der detektierten Kraft auf das Bedienelement einen vorgegebenen Kraftschwellwert in einem vorgegebenen Winkelbereich der Bedienhebelbetätigung überschreitet.

Es kann bei einer vorgewählten Fahrgeschwindigkeit über einem vorbestimmten Geschwindigkeitsschwellwert vorgesehen sein, dass zunächst eine Verzögerung auf einen Geschwindigkeitswert unter dem Geschwindigkeitsschwellwert eingeleitet wird, dann der Reversiervorgang durchgeführt wird und nach Abschluss des Reversiervorgangs wieder auf die ursprünglich vorgewählte Fahrgeschwindigkeit über den Geschwindigkeitsschwellwert hinaus beschleunigt wird.

Es kann auch vorgesehen sein, dass zumindest im manuellen Betrieb der Steuerung Sensoren die Höhe und die Richtung der auf das Bedienelement ausgeübten Kraft detektieren, und dass die Steuerung in Abhängigkeit vom detektierten Winkel relativ zur Fahrtrichtung und der Höhe der Kraft ein Steuersignal für eine Beschleunigung, eine Verzögerung, oder einen Notstopp erzeugt.

Dies hat den Vorteil, dass im manuellen Betrieb die Beschleunigung über eine Krafteinwirkung des Fahrzeugführers gesteuert werden kann. Dabei ist eine sensiblere Steuerung möglich. Je nach Höhe der Kraft kann detektiert werden, ob eine hohe oder eine geringe Beschleunigung oder eine geringe Verzögerung, eine hohe Verzögerung, oder sogar ein Notstopp gewünscht ist.

Im Folgenden wird unter Bezugnahme auf die Zeichnungen ein Ausführungsbeispiel der Erfindung näher erläutert.

Es zeigen:
- Fig. 1: die Auswirkungen der Betätigung des Bedienelementes,
- Fig. 2: das Bedienungselement,
- Fig. 3: eine schematische Darstellung einer erfindungsgemäßen Straßenbaumaschine mit einem Bedienelement, und
- Fig. 4: eine schematische Darstellung des Reversierungsvorgangs.

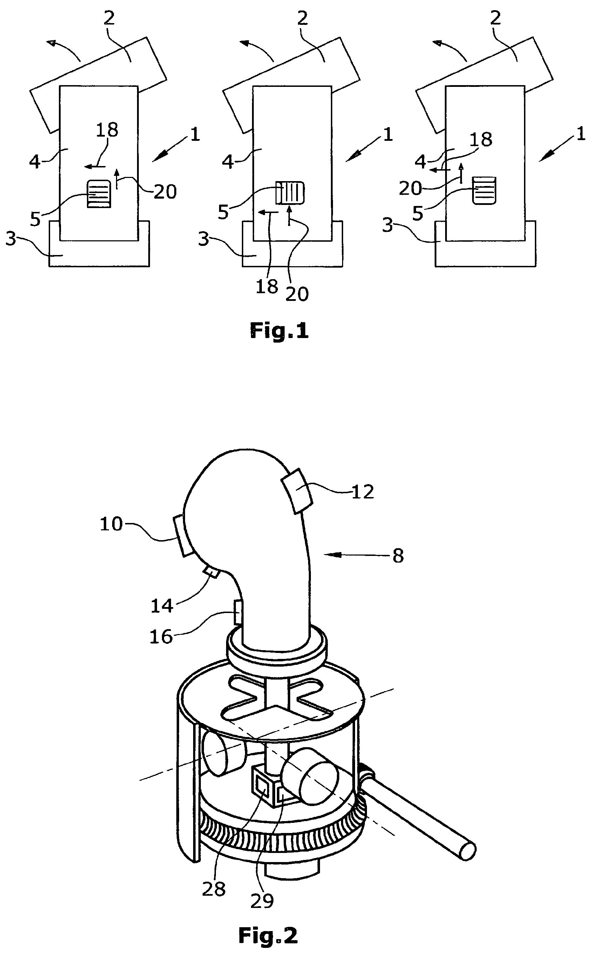

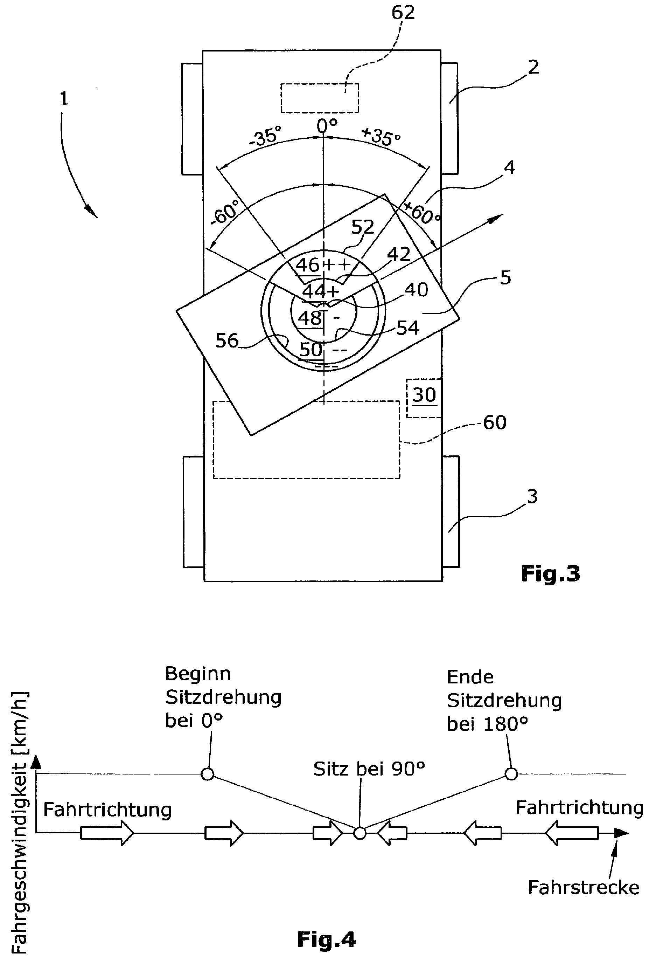

In Fig. 1 und 3 ist schematisch eine Straßenwalze 1 mit zwei Walzenbandagen 2,3 dargestellt, von denen mindestens eine lenkbar ist. Die Walzenbandagen 2,3 sind über ein Fahrgestell 4 miteinander verbunden, auf dem ein Fahrerstand für eine Bedienungsperson angeordnet ist.

In dem Fahrerstand ist ein drehbarer Fahrersitz 5 mit integrierter Bedieneinheit 8 für den Fahrbetrieb angeordnet. Die Bedieneinheit 8 weist vorzugsweise einen Bedienhebel auf, dessen Funktionen im Einzelnen in Verbindung mit Fig. 2 erläutert werden.

Im manuellen Betrieb beschleunigt der Fahrer bzw. verzögert der Fahrer die Fahrgeschwindigkeit vorzugsweise durch Kraftvorgabe auf das Bedienelement 8. Bei Erreichen der gewünschten Fahrgeschwindigkeit kann der Fahrer dies durch einen Taster bestätigen. Die Straßenwalze fährt dann so lange mit konstanter Geschwindigkeit bis über eine Krafteinwirkung auf das Bedienelement 8 eine Beschleunigung oder Verzögerung ausgelöst wird.

Fig. 2 stellt das Bedienelement 8 mit seinen Bauteilen und seinen Bedienfunktionen dar. Das Bedienelement 8 besitzt Schalteinrichtungen 10 zum Einleiten eines Reversiervorgangs, sowohl im manuellen als auch automatischen Fahrbetrieb, Schalteinrichtungen 12 für die Hinterradlenkung bzw. Hundegang, Schalteinrichtungen 14 für das Ein- und Ausschalten der Vibration, sowie Schalteinrichtungen 16 für das Entriegeln der Fahrsperre. Es versteht sich, dass die angeführten Bedienfunktionen nicht ausdrücklich am Bedienelement 8 angeordnet sein müssen, sondern auch in der Reichweite des Fahrers, z.B. am Sitz angeordnet sein können.

Fig. 4 erläutert den Reversiervorgang, der mit Hilfe eines Schaltbefehls an der Schalteinrichtung 10 ausgelöst werden kann. Die schematische diagrammartige Darstellung zeigt die Höhe der Geschwindigkeit und die Fahrtrichtung in Abhängigkeit von der Sitzposition. Dabei soll der Fahrersitz 5 in der ursprünglichen Fahrtrichtung ausgerichtet einen Sitzdrehungswinkel von 0° haben. Während des Reversiervorgangs bewegt sich der Fahrersitz von dieser 0°-Stellung bzw. von seiner aktuellen Stellung über eine Sitzdrehposition von 90°, nämlich quer zur ursprünglichen Fahrrichtung hinaus, bis in eine Sitzdrehposition von 180°, die in Gegenrichtung zur ursprünglichen Fahrtrichtung verläuft. Sobald der Reversiervorgang durch Betätigung der Schalteinrichtung 10 eingeleitet wird, beginnt die Sitzdrehung, beispielsweise bei 0°, wobei gleichzeitig die Fahrgeschwindigkeit, vorzugsweise kontinuierlich reduziert wird bis in eine Sitzdrehposition von ca. 90°. Sollte bei Einleitung des Reversiervorgangs die Fahrgeschwindigkeit über einem vorgegebenen Geschwindigkeitsschwellwert liegen, wird die Straßenwalze zunächst auf eine Geschwindigkeit unterhalb des Geschwindigkeitsschwellwertes verzögert und erst anschließend die Sitzdrehung mit der weiteren Verzögerung eingeleitet.

In der Sitzdrehposition von ca. 90° muss die Fahrgeschwindigkeit zum Umschalten in die entgegengesetzte Fahrtrichtung bis auf Null reduziert werden, um dann bei weiterer Sitzdrehung wieder auf die den Geschwindigkeitsschwellwert anzusteigen, der spätestens bei einer Sitzdrehungsposition von 180° zur ursprünglichen Fahrtrichtung erreicht wird. Anschließend kann die Straßenwalze weiter auf eine vorgewählte Fahrgeschwindigkeit beschleunigt werden. Es versteht sich, dass die Fahrtrichtungsumkehr nicht zwangsläufig in einer Sitzdrehposition von exakt 90° erfolgen muss, sondern auch z. B. in einem Winkelbereich von 80 - 100°, vorzugsweise 85 - 95° erfolgen kann. Des Weiteren könnte auch vorgesehen sein, dass die jeweiligen Fahrgeschwindigkeiten in Vorwärts- bzw. in Rückwärtsrichtung unterschiedlich vorwählbar sind.

Mögliche Ausgangszustände des Bedienelementes 8 bei Einleitung des Reversiervorgangs sind entweder eine Neutralstellung des Bedienelementes 8 oder eine ausgelenkte Position des Bedienelementes 8 hinsichtlich Fahrgeschwindigkeit.

Der Fahrersitz 5 kann sich in Fahrtrichtung (Sitzdrehposition 0°) oder in relativ zur Fahrtrichtung gedrehter Position befinden.

Bei Einleitung der Sitzdrehung kann der Fahrersitz 5 eine vom Fahrer bewusst vorgewählte Sitzdrehposition aufweisen. Wenn sich der Fahrersitz 5 nicht in der Mittelstellung befindet, kann bei Einleitung des Reversiervorgangs zunächst eine automatische Sitzdrehung auf die 0°-Position erfolgen. Es kann auch der Fall auftreten, dass die Bedienungsperson den Sitz aus einer Mittenposition seitlich verschoben hat. Wird in einer solchen Position der Reversiervorgang eingeleitet, wird der Sitz zunächst in die Mittenposition überführt und dann der Reversiervorgang eingeleitet.

Während des Reversiervorgangs aus dem Automatikbetrieb steuert die Maschine die Fahrgeschwindigkeit automatisch, solange das Bedienelement 8 nicht betätigt wird. Wird nach Einleitung des Reversiervorgangs das Bedienelement 8 betätigt, wird der Reversiervorgang abgebrochen, so dass die Schalteinrichtung 10 zur Fortsetzung des Reversiervorgangs erneut betätigt werden muss.

Je nach Ausgangssitzdrehposition kann die Steuerung den kürzesten Weg zur Drehung des Sitzes wählen.

Die Auswertung der auf das Bedienelement 8 ausgeübten Steuerkraft erfolgt in zwei Dimensionen mit Hilfe von Kraftsensoren 28, 29, wie sie beispielhaft in Fig. 2 dargestellt sind.

Die zweidimensionale Auswertung der Steuerkraft ermöglicht es, die Höhe und die Richtung der auf das Bedienelement 8 ausgeübten Kraft zu detektieren, wobei eine Steuerung 30 in Abhängigkeit vom detektierten Winkel relativ zur Fahrtrichtung und der Höhe der Kraft ein Steuersignal für eine Beschleunigung, eine Verzögerung oder einen Notstopp erzeugt.

Die Kraftrichtung wird stets parallel zur Fahrtrichtung ausgewertet. Auch bei einem drehbaren Fahrersitz ist es möglich, die Kraftrichtung stets parallel zur Fahrtrichtung auszuwerten. Hierzu ist lediglich eine Winkelinformation hinsichtlich der Sitzdrehposition relativ zur Fahrzeuglenkachse erforderlich.

In Fig. 3 ist schematisch dargestellt, in welcher Weise die detektierte Kraft in Fahrtrichtung ausgewertet wird. Die schematische Darstellung in Fig. 3 zeigt die winkel- und kraftabhängige Auswertung der auf das Bedienelement 8 ausgeübten Kraft. In Vorwärtsrichtung gesehen sind zunächst beispielsweise zwei Kraftschwellwerte 40, 42 vorgesehen, bei deren Überschreitung zunächst eine geringe Beschleunigung in einem ersten Winkelbereich 44 und dann eine höhere Beschleunigung in einem vorzugsweise relativ zu dem ersten Winkelbereich 44 engeren Winkelbereich 46 bewirkt wird. Die geringe Beschleunigung ist mit einem "+" im Winkelbereich 44 gekennzeichnet und die hohe Beschleunigung ist mit "++" im Winkelbereich 46 gekennzeichnet. Es versteht sich, dass die Winkelbereiche 44 und 46 auch gleich groß sein können.

Die Winkelbereiche sind winkelmäßig begrenzt, wobei vorzugsweise für den Winkelbereich 44 ein größeres Winkelsegment zur Auswertung der Steuerkraft eingestellt sein kann als für den zweiten Winkelbereich 46. Der zweite Winkelbereich 46 für eine hohe Beschleunigung kann beispielsweise einen Winkelbereich kleiner ± 45° relativ zur Fahrtrichtung, vorzugsweise ca. ± 35°, aufweisen, also z.B. einen Gesamtwinkelbereich von 50° bis 80° überdecken.

Der Winkelbereich 44 geringer Beschleunigung umfasst einen Gesamtwinkelbereich von vorzugsweise über 90°, beispielsweise 80° bis ca. 150°.

Wird die Steuerkraft in eine Richtung ausgeübt, die außerhalb des festgelegten Krafschwellwertes 40 im engeren Winkelbereich 46 liegt, findet ein Wechsel zu einer höheren Beschleunigung statt.

Ergibt die Auswertung der auf das Bedienelement 8 ausgeübten Kraft eine Unterschreitung des ersten Kraftschwellwertes 40, wird eine geringe Verzögerung eingestellt. Das Feld mit der geringen Verzögerung im gesamten Winkelbereich 44, 48 ist in Fig. 1 mit "-" gekennzeichnet.

In dem verbleibenden Winkelbereich 48 außerhalb des ersten Winkelbereiches 44 wird eine geringe Verzögerung eingestellt, solange ein dritter Kraftschwellwert 54 nicht überschritten wird. Bei Überschreitung wird eine hohe Verzögerung "--" eingestellt.

Die Kraftschwellwerte 42 und 54 können betragsmäßig gleich hoch sein.

Wird in dem verbleibenden Winkelbereich 48 außerhalb des ersten Winkelbereiches 44 ein vierter Kraftschwellwert 56 überschritten, wird ein Notstopp "---" verfügt.

Im Automatikbetrieb kann im ersten Winkelbereich 44 vorgesehen sein, dass Kräfte auf das Bedienelement 8 oberhalb eines festgelegten Kraftschwellwertes 52 den Automatikbetrieb zwangsläufig auf Handbetrieb umschalten.

## Patentansprüche

1. Selbstfahrende Straßenbaumaschine, insbesondere Straßenwalze (1),
- mit einem Fahrantrieb,
- mit einer Lenkungseinrichtung,
- mit einer Steuerung (30) für den Fahrantrieb und die Lenkungseinrichtung, und
- mit einem um mindestens 180° drehbaren Fahrersitz (5) mit integriertem Bedienelement (8) für die Fahrgeschwindigkeit,
- wobei das Bedienelement (8) die Stellsignale für den Fahrantrieb in Abhängigkeit von der Richtung der Stellbewegung des Bedienelementes (8) oder der Richtung der Krafteinwirkung auf das Bedienelement (8) erzeugt,
**dadurch gekennzeichnet, dass**
die Steuerung (30) auf einen ersten Schaltbefehl hin einen Reversiervorgang mit Verzögerung, Sitzdrehung, Fahrtrichtungswechsel und Beschleunigung auf die eingestellte Fahrgeschwindigkeit in Gegenrichtung zur ursprünglichen Fahrtrichtung automatisch ausführt.

2. Vorrichtung nach Anspruch 1, **dadurch gekennzeichnet, dass** die Steuerung in einem Winkelbereich der Sitzdrehung von 80° bis 100°, vorzugsweise von 85° bis 95°, zur ursprünglichen Fahrtrichtung die Fahrgeschwindigkeit auf einen geringen Wert r bis zum Stillstand reduziert.

3. Vorrichtung nach Anspruch 1 oder 2, **dadurch gekennzeichnet, dass** die Steuerung (30) auf den ersten Schaltbefehl hin die vorgewählte Fahrgeschwindigkeit bis zu einer Sitzdrehung von 90° zur ursprünglichen Fahrtrichtung automatisch, vorzugsweise kontinuierlich, auf Null reduziert und anschließend bei einer weiteren Sitzdrehung bis auf 180° wieder auf die ursprünglich vorgewählte Fahrgeschwindigkeit in entgegengesetzter Richtung einstellt.

4. Vorrichtung nach einem der Ansprüche 1 bis 3, **dadurch gekennzeichnet, dass** bei Veränderung der Position des Bedienelementes (8) oder einer Krafteinwirkung auf das Bedienelement (8) während des Reversiervorgangs die Steuerung (30) einen Maschinenstillstand und/oder eine Stillsetzung der Sitzdrehung auslöst.

5. Vorrichtung nach einem der Ansprüche 1 bis 4, **dadurch gekennzeichnet, dass** die Steuerung, (30) falls der Fahrersitz (5) bei Auslösung des ersten Schaltbefehls auf eine von den Ausgangspositionen von 0° bzw. 180° abweichende Sitzdrehposition eingestellt ist, die Sitzdrehungsposition des Fahrersitzes (5) zunächst in eine Ausgangsposition überführt oder auf dem kürzesten Weg in eine gewünschte Sitzdrehposition überführt.

6. Vorrichtung nach einem der Ansprüche 1 bis 5, **dadurch gekennzeichnet, dass** die Steuerung (30) bei Erreichen einer gewünschten Fahrgeschwindigkeit auf einen zweiten Schaltbefehl hin in einen Automatikbetrieb übergeht, in dem die aktuellen Stellsignale für den Fahrantrieb automatisch konstant gehalten sind.

7. Vorrichtung nach einem der Ansprüche 1 bis 6, **dadurch gekennzeichnet, dass** die Steuerung (30) aus dem Automatikbetrieb auf manuellen Betrieb umschaltet, wenn die Höhe einer detektierten Kraft auf das Bedienelement (8) einen vorgegebenen Schwellwert überschreitet.

8. Verfahren zum Fahren einer Straßenbaumaschine, insbesondere einer Straßenwalze (1), mit einem drehbaren Fahrersitz (5) und einem in den Fahrersitz (5) integrierten Bedienelement (8) für den Fahrbetrieb,
**dadurch gekennzeichnet, dass**
auf einen ersten Schaltbefehl hin ein Reversiervorgang mit Verzögerung, Fahrtrichtungswechsel und Beschleunigung auf die eingestellte Fahrgeschwindigkeit in Gegenrichtung zur ursprünglichen Fahrtrichtung automatisch ausgeführt wird.

9. Verfahren nach Anspruch 8, **dadurch gekennzeichnet, dass** in einem Winkelbereich der Sitzdrehung von 80° bis 100°, vorzugsweise 85° bis 95°, zur ursprünglichen Fahrtrichtung die Fahrgeschwindigkeit auf einen Wert bis zum Stillstand reduziert wird.

10. Verfahren nach Anspruch 8 oder 9, **dadurch gekennzeichnet, dass** auf den ersten Schaltbefehl hin die Fahrgeschwindigkeit bis zu einer Sitzdrehung von 90° zur Fahrtrichtung automatisch kontinuierlich auf null reduziert wird und anschließend bis zu einer Sitzdrehung um 180° in Gegenrichtung wieder aufgenommen wird.

11. Verfahren nach Anspruch 8 bis 10, **dadurch gekennzeichnet, dass** bei einer vorgewählten Fahrgeschwindigkeit über einem vorbestimmten Geschwindigkeitsschwellwert zunächst eine Verzögerung auf einen Geschwindigkeitswert unter dem Geschwindigkeitsschwellwert eingeleitet wird, dann der Reversiervorgang durchgeführt wird und nach Abschluss des Reversiervorgangs wieder auf die ursprünglich vorgewählte Fahrgeschwindigkeit über den Geschwindigkeitsschwellwert hinaus beschleunigt wird.

12. Verfahren nach einem der Ansprüche 8 bis 11, **dadurch gekennzeichnet, dass** bei Veränderung der Position oder Betätigung des Bedienelementes (8) während des Reversiervorgangs ein Maschinenstillstand und/oder eine Stillsetzung der Sitzdrehung ausgelöst wird.

13. Verfahren nach einem der Ansprüche 8 bis 12, **dadurch gekennzeichnet, dass** falls beim Auslösen des ersten Schaltbefehls eine von einer Ausgangsposition von 0° bzw. 180° abweichende momentane Sitzposition eingestellt ist, die Sitzposition zunächst in die für die Fahrtrichtung zutreffende Ausgangsposition überführt wird, oder der Fahrersitz (5) von der momentanen Sitzposition auf dem kürzesten Weg in eine gewünschte Sitzposition überführt wird, bevor der Reversiervorgang eingeleitet wird.

14. Verfahren nach einem der Ansprüche 8 bis 13, **dadurch gekennzeichnet, dass** bei Erreichen einer gewünschten Fahrgeschwindigkeit auf einen zweiten Schaltbefehl hin ein Automatikbetrieb aktiviert wird, in dem die aktuellen Stellsignale für den Fahrantrieb automatisch konstant gehalten werden.

15. Verfahren nach Anspruch 14, **dadurch gekennzeichnet, dass** aus dem Automatikbetrieb automatisch auf manuellen Betrieb umgeschaltet wird, wenn ein vorgegebener Schwellwert für die Höhe der detektierten Kraft auf das Bedienelement (8) überschritten wird.

## Claims

1. A self-propelling road construction machine, particularly a road roller (1), comprising
- a travel drive,
- a steering device,
- a control device (30) for the travel drive and the steering device, and
- a driver's seat (5) rotatable by at least 180° and including an integrated operating element (8) for the vehicle speed,
- the operating element (8) generating the control signals for the travel drive in dependence on the direction of the control movement of the operating element (8) or the direction of force application on the operating element (8),
**characterized in that**
the control device (30) is operative, in response to a first switching command, to automatically perform a reversing process comprising deceleration, seat rotation, change of direction of travel, and acceleration to the set vehicle speed in opposite direction to the original direction of travel.

2. The device according to claim 1, **characterized in that**, in an angular range of the seat rotation from 80° to 100°, preferably from 85° to 95° relative to the original direction of travel, the control device is operative to reduce the vehicle speed to a small value r until standstill has been reached.

3. The device according to claim 1 or 2, **characterized in that**, in response to the first switching command, the control device (30) is operative, up to a seat rotation of 90° relative to the original direction of travel, to automatically and preferably continuously reduce the preselected vehicle speed to zero and then, with a further seat rotation up to 180°, to set the vehicle speed again to the originally preselected vehicle speed in the opposite direction.

4. The device according to any one of claims 1 to 3, **characterized in that**, in case of a change of the position of the operating element (8) or an application of force to the operating element (8) during the reversing process, the control device (30) is operative to trigger a standstill of the machine and/or stoppage of the seat rotation.

5. The device according to any one of claims 1 to 4, **characterized in that** the control device (30), if the driver's seat (5) at initiation of the first switching command has been set to a seat rotary position deviating from the initial positions of 0° and respectively 180°, is operative to first transfer the seat rotary position of the driver's seat (5) into an initial position or to transfer the seat rotary position via the shortest path to a desired seat rotary position.

6. The device according to any one of claims 1 to 5, **characterized in that** the control device (30) is operative, when a desired travel speed has been reached, to transition, in response to a second switching command, to automatic operation in which the current control signals for the travel drive are automatically held constant.

7. The device according to any one of claims 1 to 6, **characterized in that** the control device (30) is operative to switch from automatic operation to manual operation when the level of a detected force acting on the operating element (8) exceeds a predetermined force threshold value.

8. A method for driving a road construction machine, particularly a road roller (1), said road construction machine comprising a rotatable driver's seat (5) and an operating element (8) for travel operation, said operating element (8) being integrated into the driver's seat (5),
**characterized in that**,
in response to a first switching command, a reversing process is automatically performed, said reversing process comprising deceleration, change of direction of travel, and acceleration to the set vehicle speed in opposite direction to the original direction of travel.

9. The method according to claim 8, **characterized in that** in an angular range of the seat rotation from 80° to 100°, preferably from 85° to 95° relative to the original direction of travel, the vehicle speed is reduced to a value until standstill has been reached.

10. The method according to claim 8 or 9, **characterized in that**, in response to the first switching command, up to a seat rotation of 90° relative to the direction of travel, the vehicle speed is automatically and preferably continuously reduced to zero and then is resumed up to a seat rotation of 180° in the opposite direction.

11. The method according to any one of claims 8 to 10, **characterized in that**, in case of a preselected travel speed above a predetermined speed threshold value, there is first initiated a deceleration to a speed value below the speed threshold value, then the reversing process is performed and, after completion of the reversing process, an acceleration is performed again to the originally preselected travel speed beyond the speed threshold value.

12. The method according to any one of claims 8 to 11, **characterized in that**, in case of a change of the position or in case of actuation of the operating element (8) during the reversing process, a standstill of the machine and/or stoppage of the seat rotation is triggered.

13. The method according to any one of claims 8 to 12, **characterized in that**, if at initiation of the first switching command a current seat position has been set which deviates from the initial position of 0° and respectively 180°, the seat position is first transferred into the initial position associated to the direction of travel, or the driver's seat (5) is transferred from the current seat position via the shortest path to a desired seat rotary position before the reversing process is initiated.

14. The method according to any one of claims 8 to 13, **characterized in that**, when a desired travel speed has been reached, automatic operation is initiated in response to a second switching command, and, in said automatic operation, the current control signals for the travel drive are automatically held constant.

15. The method according to claim 14, **characterized in that** said automatic operation is automatically switched to manual operation when the level of the detected force acting on the operating element (8) exceeds a predetermined threshold value.

## Revendications

1. Engin de construction routière automoteur, en particulier rouleau compresseur (1), comprenant
- un moyen d'entraînement,
- un moyen de direction,
- une commande (30) destiné au moyen d'entraînement et au moyen de direction, et
- un siège du conducteur (5) rotatif sur au moins 180° et pourvu d'un élément intégré (8) de commande de la vitesse de roulement,
- l'élément de commande (8) générant les signaux de réglage du système d'entraînement en fonction du sens du mouvement de réglage de l'élément de commande (8) ou du sens de la force agissant sur l'élément de commande (8),
**caractérisé en ce que**
la commande (30) effectue automatiquement sur une première instruction de commutation un processus réversible comportant une décélération, une rotation du siège, un changement de sens de roulement et une accélération à la vitesse de roulement réglée dans le sens opposé au sens de roulement initial.

2. Dispositif selon la revendication 1, **caractérisé en ce que** la commande réduit la vitesse de roulement à une faible valeur r jusqu'à l'arrêt dans une plage angulaire de rotation de siège de 80° à 100°, de préférence de 85° à 95°, par rapport au sens de roulement initial.

3. Dispositif selon la revendication 1 ou 2, **caractérisé en ce que** la commande (30) réduit, sur la première instruction de commutation, la vitesse de roulement présélectionnée à zéro automatiquement, de préférence en continu, jusqu'à une rotation de siège de 90° par rapport à la direction de déplacement initiale puis, lors d'une poursuite de la rotation du siège jusqu'à 180°, règle de nouveau à la vitesse de roulement présélectionnée initiale dans le sens opposé.

4. Dispositif selon l'une des revendications 1 à 3, **caractérisé en ce que**, lorsque la position de l'élément de commande (8) ou qu'une force agissant sur l'élément de commande (8) varie pendant le processus réversible, la commande (30) déclenche un arrêt de l'engin et/ou un arrêt de la rotation du siège.

5. Dispositif selon l'une des revendications 1 à 4, **caractérisé en ce que**, lorsque le siège de conducteur (5) est réglée à une position de rotation de siège différente des positions initiales de 0° ou 180° sur déclenchement de la première instruction de commutation, la commande (30) fait passer la position de rotation du siège de conducteur (5) tout d'abord dans une position initiale ou par le chemin le plus court dans une position de rotation de siège souhaitée.

6. Dispositif selon l'une des revendications 1 à 5, **caractérisé en ce que**, une fois que la vitesse de roulement souhaitée est atteinte, la commande (30) ordonne, sur une seconde instruction de commande, le passage en mode automatique dans lequel les signaux de commande actuels du système d'entraînement sont maintenus constants de façon automatique.

7. Dispositif selon l'une des revendications 1 à 6, **caractérisé en ce que** la commande (30) commute du mode automatique en mode manuel lorsque l'intensité d'une force détectée exercée sur l'élément de commande (8) dépasse une valeur de seuil prédéterminée.

8. Procédé pour faire rouler un engin de construction routière, en particulier un rouleau compresseur (1), qui est équipé d'un siège de conducteur rotatif (5) et d'un élément de commande (8) intégré dans le siège de conducteur (5) et destiné à commander le mode de roulement,
**caractérisé en ce que**
un processus réversible comportant une décélération, un changement de sens de roulement et une accélération à la vitesse de roulement réglée dans le sens opposé au sens de roulement initial est effectué automatiquement sur une première instruction de commutation.

9. Procédé selon la revendication 8, **caractérisé en ce que** la vitesse de roulement est réduite à une faible valeur jusqu'à l'arrêt dans une plage angulaire de rotation de siège de 80° à 100°, de préférence de 85° à 95°, par rapport au sens de roulement initial.

10. Procédé selon la revendication 8 ou 9, **caractérisé en ce que**, sur la première instruction de commutation, la vitesse de roulement est réduite à zéro automatiquement en continu jusqu'à une rotation de siège de 90° par rapport à la direction de déplacement puis de nouveau jusqu'à une rotation de siège de 180° dans le sens opposé.

11. Procédé selon les revendications 8 à 10, **caractérisé en ce que**, à une vitesse de roulement présélectionnée au-dessus d'une valeur de seuil de vitesse prédéterminée, on effectue une décélération à une valeur de vitesse au-dessous de la valeur de seuil de vitesse, puis on effectue le processus réversible et, une fois le processus réversible terminé, on accélère de nouveau à la vitesse de roulement initialement présélectionnée au-dessus de la valeur de seuil de vitesse.

12. Procédé selon l'une des revendications 8 à 11, **caractérisé en ce que**, lors d'une modification de la position ou de l'actionnement de l'élément de commande (8) pendant le processus réversible, on déclenche un arrêt de l'engin et/ou un arrêt de la rotation du siège.

13. Procédé selon l'une des revendications 8 à 12, **caractérisé en ce que**, si une position de siège instantanée, différente de la position initiale de 0° ou 180°, est réglée lors du déclenchement de la première instruction de commutation, on fait passer la position du siège tout d'abord dans la position initiale appropriée au sens de roulement, ou on fait passer le siège de conducteur (5) de la position de siège instantanée par le chemin le plus court dans une position de siège souhaitée avant d'effectuer le processus réversible.

14. Procédé selon l'une des revendications 8 à 13, **caractérisé en ce que**, lorsqu'une vitesse de roulement souhaitée est atteinte, on active sur une seconde instruction de commutation un mode automatique dans lequel les signaux actuels de réglage du système d'entraînement sont maintenus constants de façon automatique.

15. Procédé selon la revendication 14, **caractérisé en ce qu'**on commute automatiquement du mode automatique en mode manuel lorsqu'une valeur de seuil prédéterminée de l'intensité de la force détectée exercée sur l'élément de commande (8) est dépassée.
